(19) **Europäisches Patentamt**
**European Patent Office**
**Office européen des brevets**

(11) **EP 2 165 450 B1**

(12) **EUROPEAN PATENT SPECIFICATION**

(45) Date of publication and mention
of the grant of the patent:
**06.11.2019 Bulletin 2019/45**

(51) Int Cl.:
*H04L 1/00* (2006.01)          *H04L 1/06* (2006.01)
*H04L 5/00* (2006.01)          *H04W 72/04* (2009.01)
*H04L 1/18* (2006.01)

(21) Application number: **07852200.0**

(22) Date of filing: **30.11.2007**

(86) International application number:
**PCT/SE2007/050928**

(87) International publication number:
**WO 2009/002244 (31.12.2008 Gazette 2009/01)**

(54) **METHOD AND ARRANGEMENT FOR IMPROVED RADIO RESOURCE ALLOCATION IN A MIMO SYSTEM**

VERFAHREN UND ANORDNUNG ZUR VERBESSERTEN FUNKBETRIEBSMITTELZUTEILUNG IN EINEM MIMO-SYSTEM

MÉTHODE ET ARRANGEMENT AMÉLIORANT L'ATTRIBUTION DES RESSOURCES RADIO DANS UN SYSTÈME MIMO

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.06.2007 US 929431 P**

(43) Date of publication of application:
**24.03.2010 Bulletin 2010/12**

(73) Proprietor: **Unwired Planet International Limited Dublin 2 (IE)**

(72) Inventors:
• **TSAI, Shiau-He**
**CA 92126, San Diego (US)**
• **WAN, Lei**
**Beijing 100190 (CN)**

(74) Representative: **Grünecker Patent- und Rechtsanwälte**
**PartG mbB**
**Leopoldstraße 4**
**80802 München (DE)**

(56) References cited:
**EP-A1- 1 294 120          EP-A1- 1 788 742**
**WO-A1-2007/024932          WO-A2-2006/130541**
**WO-A2-2006/130541          US-A- 5 689 439**
**US-A1- 2005 190 849          US-A1- 2006 018 287**

• **DE CARVALHO E. ET AL.: 'ARQ stategies for 2x2 spatially multiplexed MIMO systems' SIGNALS, SYSTEMS AND COMPUTERS, 2006 ACSSC '06. FORTIETH ASILOMAR CONFERENCE October 2006 - November 2006, pages 1666 - 1670, XP031081316**
• **LI X. ET AL.: 'Effects of iterative detection and decoding on the performance of BLAST' GLOBAL TELECOMMUNICATIONS CONFERENCE, 2000. GLOBECOM '00. IEEE vol. 2, 2000, pages 1061 - 1066, XP001017247**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to wireless communication systems in general, and specifically to improved resource allocation in a multiple-input multiple-output wireless communication system.

BACKGROUND

In a wireless communication system, a transmitter (e.g. a base station, or a terminal) may utilize multiple transmit antennas for data transmission to a receiver equipped with multiple receive antennas. The multiple transmit- and receive antennas form a Multiple-Input Multiple-Output (MIMO) channel that may be used to increase throughput and/or improve reliability. For example, the transmitter may transmit a number of data streams simultaneously from the transmit antennas to improve throughout. Alternatively, the transmitter may transmit a single data stream redundantly from all transmit antennas to improve reception by the receiver. Another common term for this technology is smart antennas, which performs spatial information processing with multiple antennas. MIMO systems offer significant increases in data throughput and link range without additional bandwidth or transmit power for wireless communications. This is achieved by higher spectral efficiency (more bits per second per Hertz of bandwidth) and link reliability or diversity (reduced fading).

For wireless communications, MIMO systems provide an extra signal space dimension in addition to frequency and time. Dedicated transmit- and receive-antenna pairs create ranks of the spatial dimension, e.g. the rank is representative of the number of data streams that can be transmitted simultaneously via the MIMO channel. If too many data streams are sent, then excessive interference may be observed by each of these data streams and the overall performance may suffer. Conversely, if too few data streams are sent, then the capacity of the MIMO channel is not fully utilized. Ideally, each link of the MIMO transmit-receive antenna pairs occupies one rank in the signal space such that channel coefficients form a full-rank matrix. A MIMO receiver can then use signal-processing techniques to separate signals from different antennas that are overlapped in frequency and time by their linear independence in the spatial dimension. The separation of signals is similar to insulated wires, with the only exception that it is accomplished through the common wireless medium of the same frequency and time. With this extra spatial dimension created by MIMO, multiple data streams can be superposed on one another over the air, thereby increasing the supportable data rate.

Multiple retransmission schemes are disclosed in prior art. One commonly used scheme is so-called Automatic Repeat reQuest (ARQ), which is an error control technique for data transmissions, which makes use of acknowledgements and timeouts to achieve reliable data transmission. An evolved variant of ARQ is the so-called Hybrid-ARQ or H-ARQ, which optimally gives better performance over ordinary ARQ on wireless channels.

H-ARQ is frequently utilized as a remedy for link adaptation error or as a mechanism for interference reduction by opportunistic early termination. Due to unpredictable fading in wireless mobile environments, the MIMO channel might have non-negligible changes between the time of being scheduled and the time of reporting. The mismatch in reporting and scheduling may result in selecting overly optimistic modulation and coding schemes that the link can support, hence causing packet errors. Without H-ARQ, the residual packet errors in the physical layer can only be corrected by upper layer protocols. With H-ARQ, the physical layer is able to quickly respond to retransmit the packet for a second chance.

For the uplink, dividing the required energy for a packet to several transmissions will reduce the power, hence interference, fluctuation. H-ARQ can take advantage of possible early termination of an uplink packet to harvest the opportunistic gain. H-ARQ is expected to provide the same benefits for MIMO systems.

Therefore, there is a need for a method and arrangement enabling improved efficiency for HARQ retransmissions in MIMO systems.

EP 1 788 742 A1 describes an automatic retransmission request control system in OFDM-MIMO communication system. In this system, an ACK/NACK output part of a receiver transmits, to a transmitter, a feedback information of positive or negative response based on the result of a cyclic redundancy check. An error data stream decision part of the transmitter determines, based on the feedback information, a data stream that need be retransmitted, and a retransmission mode selection part selects a retransmission mode from among (a) a mode in which to transmit the data, which are to be retransmitted, via the same antenna as in the previous transmission, while transmitting, at the same time, new data by use of an antenna via which no data retransmission is requested; (b) a mode in which to transmit the data, which are to be retransmitted, via an antenna via which no retransmission is requested, while transmitting new data via another antenna at the same time; (c) a mode in which to use STBC to retransmit the data via an antenna via which no retransmission is requested; and (d) a mode in which to use STBC to retransmit the data via all the available antennas.

BRIEF DESCRIPTION OF THE DRAWINGS

The invention, together with further objects and advantages thereof, may best be understood by referring to the following description taken together with the accompanying drawings, in which:

Fig. 1 illustrates the principles of known MIMO signaling
Fig. 2a illustrates a general wireless system;
Fig. 2b illustrates a schematic generalized MIMO system;
Fig. 3 illustrates a schematic flow diagram of a general embodiment of a method according to the present invention;
Fig. 4a illustrates schematically the principle of vertical coding;
Fig. 4b illustrates schematically the principle of horizontal coding;
Fig. 5 illustrates a schematic block diagram of an arrangement according to the present invention;

ABBREVIATIONS

| ACK | ACKnowledgement |
| CDMA | Code Division Multiple Access |
| CRC | Cyclic Redundancy Check |
| CQI | Channel quality information |
| H-ARQ | Hybrid Automatic Repeat reQuest |
| MIMO | Mutiple-Input Multiple-Output |
| NACK | Negative ACKnowledgement |
| OFDM | Orthogonal Frequency Division Multiplexing |
| PUSC | Partial Usage of Sub-Carrier |
| SIMO | Single-Input Multiple-Output |
| WCDMA | Wideband Code Division Multiple Access |

DETAILED DESCRIPTION

To provide ample understanding of relevant concepts of the present invention, a general description of the theory of multiple-input multiple-output system signals will follow below.

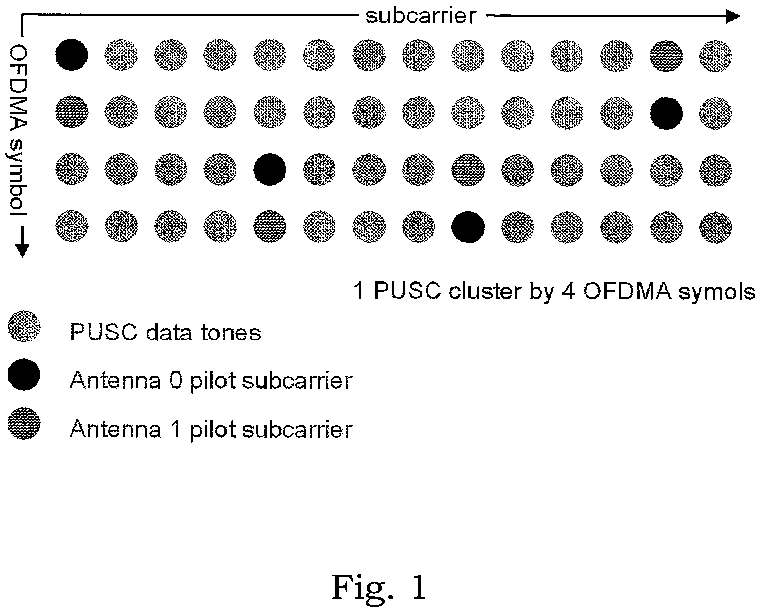

Generally, the spatial signature of signals in a MIMO system can be extracted from the pilots or pilot signals. For example, the pilots of different antennas can be designed to be orthogonal in time and frequency domain. A 2 x 2 MIMO example of the 802.16e [1] is illustrated in FIG1. Consequently, the example assumes a system comprising two transmit/receive antenna pairs i.e. two transmit antennae and two receive antennae. Accordingly, a signal is illustrated as a Partial Usage of Sub-Carrier (PUSC) cluster comprising four Orthogonal Frequency Division Multiplexing (OFDM) symbols and their separate pilots and their separation in time (OFDMA symbol) and frequency (subcarrier).

In FIG1, a receiver can derive the 2 x 1 channel vector $\underline{h}_0 = [h_{0,0}\ h_{0,1}]^T$ at Antenna 0 from the solid black dots, and the channel vector $\underline{h}_1 = [h_{1,0}\ h_{1,1}]^T$ for Antenna 1 from the stripped dots, where the first digit in the subscript denotes the transmit antenna number and the second denotes the receive antenna number. Assume the data symbol transmitted by Antenna 0 is $x_0$ and the one by Antenna 1 is $x_1$, then at the two receive antennae, the observation can be expressed by Equation 1

$$\left\| \begin{matrix} y_0 \\ y_0 \end{matrix} \right\| = \begin{bmatrix} h_{0,0} & h_{1,0} \\ h_{0,1} & h_{1,1} \end{bmatrix} \left\| \begin{matrix} x_0 \\ x_1 \end{matrix} \right\| + \begin{bmatrix} n_0 \\ n_1 \end{bmatrix} \qquad (1)$$

where $n_0$ and $n_1$ are the noise and interference samples observed at receive Antennae 0 and 1. Looking at Equation 1, if noise components can be ignored and assume the channel coefficient matrix is full-rank, it can be solved for the two unknowns $x_0$ and $x_1$ based on the two observations $y_0$ and $y_1$. In practice, when noise components are not negligible, a noise variance matrix is usually added to the inverse of the channel coefficient matrix for the minimum mean-squared-error solution of the data symbols.

The above example can be easily generalized to $M \times N$ MIMO systems, where $M$ is the number of transmitted symbols in spatial domain of a MIMO codeword and $N$ the number of received MIMO symbol observations. Note that the MIMO pilot in the example of FIG1 is not only restricted to frequency and time domain. Indeed, the horizontal and the vertical axes can be any dimensions of the signal space, which include time, frequency or code, as long as channel coefficients in the signal space can be estimated from pilots with practical filters. Thus, the equation is written in a general sense as

$$\left\| \begin{array}{c} y_0 \\ \vdots \\ y_{N-1} \end{array} \right\| = \left[ \begin{array}{ccc} h_{0,0} & \cdots & h_{0,M-1} \\ \vdots & \ddots & \vdots \\ h_{N-1,0} & \cdots & h_{N-1,M-1} \end{array} \right] \left[ \begin{array}{ccc} v_{0,0} & \cdots & v_{0,M-1} \\ \vdots & \ddots & \vdots \\ v_{N-1,0} & \cdots & v_{N-1,M-1} \end{array} \right] \left\| \begin{array}{c} x_0 \\ \vdots \\ x_{M-1} \end{array} \right\| + \left[ \begin{array}{c} n_0 \\ \vdots \\ n_{N-1} \end{array} \right] \qquad (2)$$

where $\left[ \begin{array}{ccc} v_{0,0} & \cdots & v_{0,M-1} \\ \vdots & \ddots & \vdots \\ v_{N-1,0} & \cdots & v_{N-1,M-1} \end{array} \right]$ is the precoding matrix at the transmitter. For those non-precoded systems where $N$ is equal to $M$, the precoding matrix is an identity matrix.

The rank of the channel coefficient matrix is less than or equal to min($M,N$). As long as the number of code words is less than the rank, the simultaneous equation has a unique solution. The parallel data streams multiplexed in the generalized temporal-spectral-and-spatial domain can increase the peak rate of the MIMO system if the channel coefficient matrix is full-rank. In summary, the instantaneous realization of wireless channel and noise must result in separable signal space components such that a unique solution exists for the multiplexed data streams.

In parallel, the spatial diversity, such as Alamuti-code or SFBC, also relies on the multi-rank channels to improve coverage. The spatial diversity reaches good performance at the uncorrelated channels among different antenna branches, but is much worse than the single-antenna transmission at the strongly correlated channels.

The transmitted data symbols in the aforementioned equations may not be correctly solved if the noise-and-interference level is too high compared to the signal part, or can be completely unsolvable if the channel coefficient matrix is not full-rank due to changing characteristic of wireless propagation. Also, the failure of the initial detection of $[x_0\ x_1]$ may be caused by excessive channel estimation error. For the system with interference cancellation at the receiver, the error propagation will result to complete failure of all the transmitted codewords. Under these scenario, the afore mentioned H-ARQ scheme is of very limited help because it is only designed to provide energy or coding gain, not to provide extra signal space dimensions to separate multiplexed signals or suppress excessive interferences. Thus, there is a need for improving the applicability of H-ARQ to MIMO systems.

One prior art in this field is to reduce the rank of MIMO for H-ARQ retransmissions [2]. The reduced rank makes a MIMO system more robust against channel estimation and interference cancellation errors, especially in the strongly correlated channels. However, the prior art only introduced the rank reduction mechanism for spatial multiplexing. With a different number of MIMO ranks during retransmission, the corresponding radio resource allocation schemes remain the same as the initial transmission. Consequently, if conditions are the same for the retransmission attempt as for the initial transmission in an interference heavy environment, then the likelihood of success of the H-ARQ is limited.

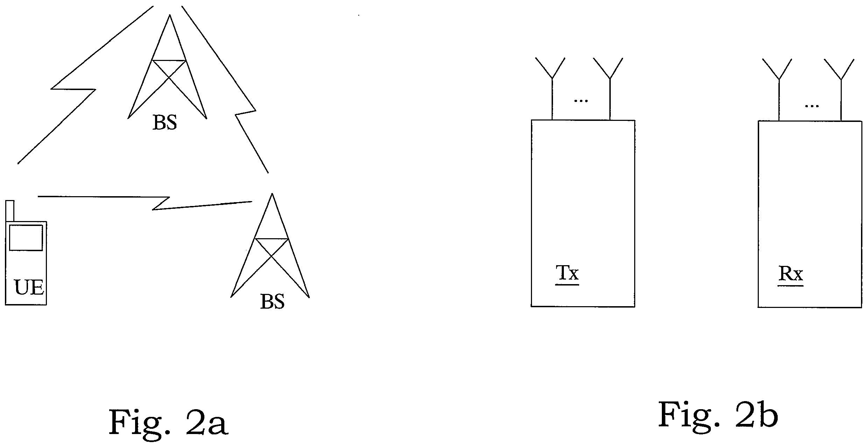

The present invention will be described below with reference to the very general wireless system illustrated in FIG2a and the MIMO system of FIG2b.

Accordingly, the system in FIG2a is a wireless communication system. The system comprises a plurality of base stations BS in one or more sectors that receive, transmit, repeat etc. wireless communication signals to each other and/or to one or more user equipment UE. Each base station BS can comprise a transmitter chain and a receiver chain, each of which can in turn comprise a plurality of components associated with signal transmission and reception (e.g. processors, modulators, multiplexers, demodulators, demultiplexers, antennas etc). User equipment UE can be for example cellular phones, smart phones, laptops, handheld communication devices, handheld computing devices, satellite radios, global positioning systems, PDAs, and/or other suitable device for communicating over the wireless network.

In addition, FIG2b visualizes a general MIMO system where some transmitting device TX comprising multiple antennas or antenna groups is in wireless communication with a receiving device RX comprising multiple antennas or antenna groups. The skilled person realizes that each of the transmitting Tx and the receiving device Rx can be adapted as transceivers with both transmitting and receiving antennas.

The present invention will mainly be discuss in the context of a wireless communication system utilizing OFDM, but it is appreciated that the same general ideas are fully adaptable to systems utilizing CDMA or WCDMA or similar.

A basic aspect of a method of the present invention is thus to allocate the radio resource in a flexible way during the reduced rank MIMO HARQ retransmission. In essence, according to a basic embodiment, upon receiving a H-ARQ the transmitter reduces the rank of the MIMO channel by selecting a subset of the available MIMO links to retransmit the requested data, not necessarily the originally allocated links and re-allocates the available radio resources to improve the H-ARQ retransmission performance.

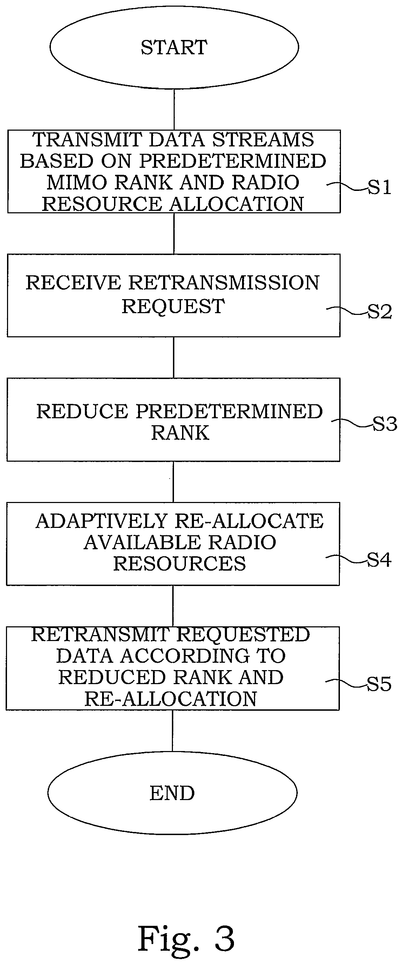

Particular, with reference to Fig. 3, a general embodiment of a method according to the present invention enables improved H-ARQ retransmissions in a node in a MIMO wireless communication system, e.g. OFDM based. However, the present invention is equally applicable to a system utilizing CDMA or WCDMA or similar Initially data is transmitted S1 across a plurality of available MIMO links based on a predetermined rank and radio resource allocation. In response to receiving a H-ARQ S2 for at least part of the transmitted data the rank of the subsequent retransmissions is reduced S3 by selecting a subset of the available MIMO links, including the links that are once again available due to successful transmissions. In addition, the available radio resources are re-allocated S4 in a flexible or adaptive manner to further increase the chance of successful retransmission of the requested data. Finally, the requested data is retransmitted S5 according to the selected subset of MIMO links, e.g. reduced rank MIMO channel, and the re-allocated radio resources.

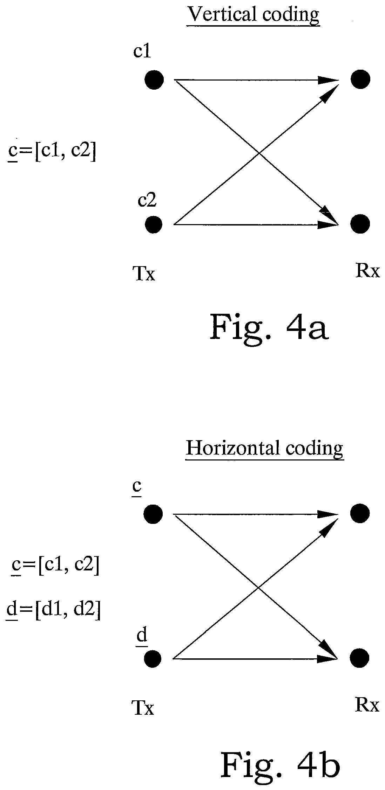

It should be noted, with reference to FIG4a and FIG4b, that for MIMO systems the data streams to be transmitted can be subjected to either of vertical or horizontal coding. Accordingly, as shown in FIG4a, for vertical coding the different symbols c1, c2 of a data stream c are transmitted over different MIMO links originating in different Tx antennas. Similarly, as shown in FIG4b, for horizontal coding the symbols comprising two data streams c and d are transmitted over different MIMO links, the two data streams also being transmitted from different Tx antennas.

The ACK/NACK feedback for MIMO HARQ data streams can be sent in a separate or an aggregate fashion. For horizontal coding, both per stream HARQ and per-transmission time interval HARQ are feasible.

The re-allocation of radio resources can be implemented in a number of various embodiments based on what conditions are to be met concerning the retransmissions.

In addition to the reduction of rank in the re-transmission, different retransmissions can choose different ranks to approach spatial domain hopping in HARQ as well. Referring to above description, the extreme case is the rank-1 retransmission with spatial domain hopping in different re-transmission tries.

According to one specific embodiment, the re-allocation of radio resources enables the re-assignment of pilot space. Therefore, to take full advantage of the dimension left by the successful data streams, it is possible to re-assign the pilot space such as to further enhance the accuracy of channel estimation for the remaining links or reduce the overhead.

A further embodiment concerns allocating the available radio resources as represented by transmission power to the remaining data stream(s) to boost the signal-to-noise ratio. Furthermore, the extra dimension can be reused as a source of spatial diversity for remaining data streams. In other words, when horizontally coded data streams was partially received, the H-ARQ retransmission of the successful streams stops and the H-ARQ retransmission of the remaining streams may switch from spatial multiplexing to space-time transmit diversity by using the released dimensions in the signal space.

In the case of aggregate ACK, when all data streams are successfully received, the transmitter will be acknowledged to stop retransmission. In the case of vertical coding and spatial diversity, one data stream is separated into several parallel streams with only one CRC, which is called as per-TTI HARQ. Before receiving the aggregate ACK, the transmitter cannot distinguish if all or part of the links is in error. Instead of retransmitting on all MIMO links, the transmitter may select only part of them for retransmission.

Firstly, the selection can be based on the delayed MIMO-branch CQI feedback corresponding to the failed previous transmission with re-allocated pilot pattern and transmission power. The reallocation of pilots can follow a predetermined order of patterns a prior known to the receiver or can be signaled by the transmitter for the retransmissions.

Secondly, the selection can be based on taking into account that the systematic bits are most important in decoding, thus always retransmit the systematic bits first with reduced rank(s).

Thirdly, in another embodiment, the transmission can be reduced to a single-input multiple-output (SIMO) system after concatenating the parallel data streams back to a serial one, with full pilot and power allocation.

Fourthly, the selection of the subset of MIMO links can be performed in a random manner, e.g., spatial domain hopping, to reach the spatial domain diversity.

The above disclosed embodiments can be either used individually or jointly. One who is skilled in the art can easily generalize the spatial domain hopping to a combination of spectral, temporal, and spatial-code domain hopping schemes. In the present disclosure this generalized method signal will be referred to as space hopping.

After the reduced-rank MIMO HARQ retransmission and successful decoding of the corresponding data stream, the receiver may use decision feedback to reconstruct a "new pilot sequence" for the very branch in the soft values buffered from the last failed transmission of combined MIMO signals. The new pilot sequence based on decision feedback will be much longer than the original one; hence, the said MIMO branch can be estimated and cancelled more accurately from the old soft values. As a result, the failed MIMO branch remaining from the last transmission can be recovered with the new interference cancellation and a better chance of successful decoding.

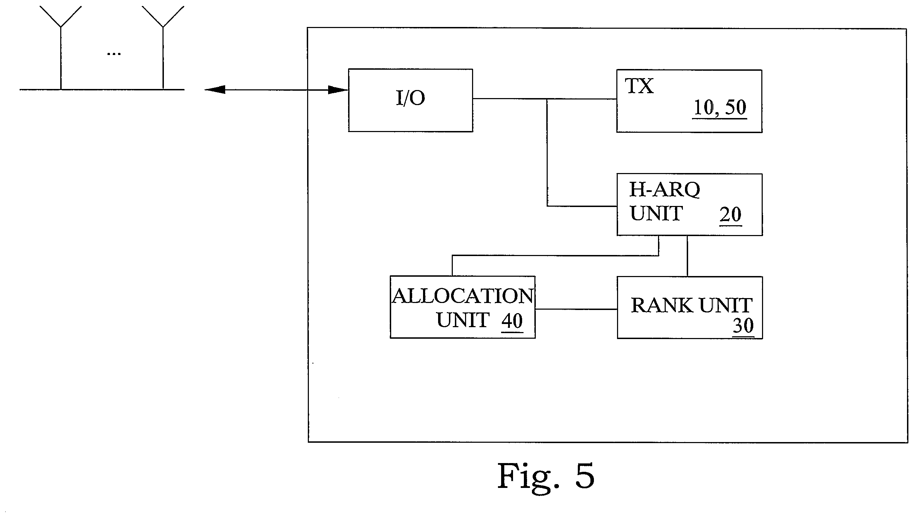

With reference to FIG5 a general embodiment of an arrangement according to the present invention is disclosed.

The arrangement can be located in either or both of a base station or mobile terminal in a wireless communication system and comprises, in addition to an antenna array and an input output unit I/O, a transmitting unit 10, 50 adapted for transmitting data streams over one or more of the antennas in the antenna array according to a predetermined rank and radio resource allocation, a H-ARQ unit 20 adapted for receiving and processing retransmission requests relating to transmitted data, a rank processing unit 30 adapted for reducing or adapting the rank of retransmissions. The rank processing unit 30 is adapted to e.g. reducing the retransmission rank by selecting a subset of available MIMO link for retransmission of requested data streams or symbols. Further, the arrangement comprises an allocation unit 40 adapted to re-allocate the radio resources for retransmissions over the selected subset of available MIMO links. Finally, the transmitting unit 10,50 is further adapted to retransmit requested data streams or symbols based on a reduced rank and re-allocation of the radio resources.

The present invention has been described in the context of a single-user MIMO scenario; however, it is equally applicable to a multi-user MIMO scenario. Either regular multi-user MIMO (MU-MIMO) with large spaced antenna arrays (uncorrelated special channel) or so called special domain multi-access (SDMA) with closely spaced antenna arrays (correlated special channel).

In addition, instead of only utilizing the re-allocated resources for retransmissions, it is also possible to transmit new data in parallel with the re-transmitted data streams, based on the reallocated resources. Consequently, the new data streams are potentially provided with better chance of successful transmission.

Advantages of the Invention comprise:

Improved effectiveness in combining reduced rank MIMO HARQ with flexible resource allocation such as signal space hopping and pilot pattern reassignment, which improve the robustness against channel estimation accuracy and interference cancellation error propagation. Not only the retransmission provides extra coding diversity, or energy gains, it also improves the condition for channel estimation and interference cancellation.

It will be understood by those skilled in the art that various modifications and changes may be made to the present invention without departure from the scope thereof, which is defined by the appended claims.

REFERENCES

[1] IEEE Std 802.16e-2005 and IEEE Std 802.16-2004/Corl-2005 (Amendment and Corrigendum to IEEE Std 802.16-2004), "IEEE Standard for local and metropolitan area networks, Part 16: Air Interface for Fixed and Mobile Broadband Wireless Access Systems, Amendment 2: Physical and Medium Access Control Layers for Combined Fixed and Mobile Operation in License Bands," Feb 28, 2006.

[2] Patent application PCT/US2006/020707 "Rank Step-Down for MIMO SCW Design Employing HARQ.

**Claims**

1. A method of improved hybrid automatic repeat request, HARQ, retransmissions of data streams in a node in a multiple-input multiple-output, MIMO, wireless communication system having a plurality of available MIMO links associated with transmit-receive antenna pairs of the MIMO wireless communication system, the method comprising:

   transmitting (S1) data across a plurality of available MIMO links according to a predetermined rank and radio resource allocation, wherein each of the plurality of available MIMO links occupies one rank in a signal space of the MIMO system;
   receiving (S2) a retransmission request for at least part of the transmitted data;
   reducing (S3) the rank for the retransmissions by selecting a subset of the plurality of available MIMO links;
   adaptively re-allocating (S4) available radio resources to said subset by at least reassigning pilot space to the subset of the plurality of available MIMO links; and
   retransmitting (S5) the requested data on said selected subset according to the reduced rank and radio resource re-allocation,
   wherein, the reallocation comprises spatial domain hopping.

2. The method according to claim 1, **characterized by** said re-allocation step comprising switching from spatial multiplexing to space-time transmit diversity.

**3.** The method according to claim 1, **characterized by** selecting one or several MIMO links for retransmission based on received channel quality information, CQI, feedback and HARQ for a failed MIMO link transmission, and re-allocating pilot pattern and transmission power for said selected MIMO links.

**4.** The method according to claim 1, **characterized by** retransmitting systematic bits for requested data with the reduced rank.

**5.** The method according to claim 1, **characterized by** randomly selecting the subset of MIMO links for retransmission.

**6.** The method according to any combination of claims 3 to 5.

**7.** The method according to claim 1, **characterized by** retransmitting the requested data utilizing multiple MIMO links.

**8.** An arrangement in a multiple-input multiple-output, MIMO, wireless communication system having a plurality of available MIMO links associated with transmit-receive antenna pairs of the MIMO wireless communication system, **characterized by**:

means (10) for transmitting data across a plurality of available MIMO links according to a predetermined rank and radio resource allocation, wherein each of the plurality of available MIMO links occupies one rank;
means (20) for receiving a retransmission request for the transmitted data;
means (30) for reducing the rank for the retransmissions by selecting a subset of the plurality of available MIMO links;
means (40) for adaptively re-allocating available radio resources to said subset by at least reassigning pilot space to the subset of the plurality of available MIMO links; and
means (50) for retransmitting the requested data on said selected subset according to the reduced rank and radio resource reallocation,
wherein, the reallocation comprises spatial domain hopping.

**Patentansprüche**

**1.** Verfahren zur verbesserten hybriden automatischen Wiederholungsanforderungs-, HARQ-, Neusendung von Datenströmen in einem Knoten in einem drahtlosen MIMO-Kommunikationssystem (MIMO - zahlreiche Eingänge zahlreiche Ausgänge) mit zahlreichen verfügbaren MIMO-Verbindungen, die Sende-Empfangs-Antennenpaaren des drahtlosen MIMO-Kommunikationssystems zugeordnet sind, wobei das Verfahren umfasst:

Senden (S1) von Daten über zahlreiche verfügbare MIMO-Verbindungen gemäß einem vorbestimmten Rang und einer Funkressourcenzuweisung, wobei jede der zahlreichen verfügbaren MIMO-Verbindungen einen Rang in einem Signalraum des MIMO-Systems einnimmt;
Empfangen (S2) einer Neusendeanforderung für wenigstens einen Teil der gesendeten Daten;
Reduzieren (S3) des Ranges für die Neusendungen durch Auswählen einer Teilmenge der Vielzahl verfügbarer MIMO-Verbindungen;
adaptives erneutes Zuweisen (S4) verfügbarer Funkressourcen zu der Teilmenge durch wenigstens erneutes Zuweisen von Pilotraum zu der Teilmenge der zahlreichen verfügbaren MIMO-Verbindungen; und
erneutes Senden (S5) der angeforderten Daten in der ausgewählten Teilmenge gemäß der Neuzuweisung von reduziertem Rang und Funkressourcen,
wobei die Neuzuteilung räumliches Domain-Hopping umfasst.

**2.** Verfahren nach Anspruch 1, **dadurch gekennzeichnet, dass** der Neuzuweisungsschritt das Umschalten von räumlichem Multiplexen auf Raum-Zeit-Sendediversität umfasst.

**3.** Verfahren nach Anspruch 1, **gekennzeichnet durch** Auswählen einer oder zahlreicher MIMO-Verbindungen zur erneuten Sendung basierend auf empfangener Kanalqualitätsinformations-, CQI-, Rückkopplung und HARQ für eine fehlgeschlagene MIMO-Verbindungssendung und erneutes Zuweisen von Pilotmustern und Sendeleistung für die ausgewählte MIMO-Verbindungen.

**4.** Verfahren nach Anspruch 1, **gekennzeichnet durch** erneutes Senden systematischer Bits für angeforderte Daten mit dem reduzierten Rang.

**5.** Verfahren nach einem der Ansprüche 1 bis 4, **dadurch gekennzeichnet, dass** die Teilmenge der MIMO-Links zur erneuten Sendung zufällig ausgewählt wird.

**6.** Verfahren nach einer beliebigen Kombination der Ansprüche 3 bis 5.

**7.** Verfahren nach Anspruch 1, **gekennzeichnet durch** erneutes Senden der angeforderten Daten unter Verwendung zahlreicher MIMO-Verbindungen.

**8.** Anordnung in einem drahtlosen MIMO-Kommunikationssystem (MIMO - zahlreiche Eingänge zahlreiche Ausgänge) mit zahlreichen verfügbaren MIMO-Verbindungen, die Sende-Empfangs-Antennenpaaren des drahtlosen MIMO-Kommunikationssystems zugeordnet sind, **gekennzeichnet durch**:

Einrichtungen (10) zum Senden von Daten über zahlreiche verfügbare MIMO-Verbindungen gemäß einem vorbestimmten Rang und einer Funkressourcenzuweisung, wobei jede der zahlreichen verfügbaren MIMO-Verbindungen einen Rang einnimmt;
Einrichtungen (20) zum Empfangen einer Neusendeanforderung für die gesendeten Daten;
Einrichtungen (30) zum Verringern des Rangs für die Neusendungen durch Auswählen einer Teilmenge der Vielzahl verfügbarer MIMO-Verbindungen;
Einrichtungen (40) zum adaptiven erneuten Zuweisen verfügbarer Funkressourcen zu der Teilgruppe, indem wenigstens der Teilgruppe der Vielzahl verfügbarer MIMO-Verbindungen Pilotraum neu zugewiesen wird; und
Einrichtungen (50) zum erneuten Senden der angeforderten Daten in der ausgewählten Teilmenge gemäß der Neuzuordnung mit reduziertem Rang und Funkressourcen, wobei die Neuzuordnung räumliches Domain-Hopping umfasst.

**Revendications**

**1.** Procédé d'amélioration de retransmissions de demandes de répétition automatique hybride, HARQ, de flux de données dans un nœud situé dans un système de communication sans fil à entrées et sorties multiples, MIMO, comportant une pluralité de liaisons MIMO disponibles associées à des paires d'antennes d'émission réception du système de communication sans fil MIMO, le procédé comprenant :

la transmission (S1) de données sur une pluralité de liaisons MIMO disponibles en fonction d'un rang prédéterminé et d'une allocation de ressources radio, chacune de la pluralité de liaisons MIMO disponibles occupant un premier rang dans un espace de signaux du système MIMO,
la réception (S2) d'une demande de retransmission pour au moins une partie des données transmises,
la réduction (S3) du rang pour les retransmissions en sélectionnant un sous-ensemble de la pluralité de liaisons MIMO disponibles,
la réallocation adaptative (S4) de ressources radio disponibles au dit sous-ensemble en réassignant au moins l'espace pilote au sous-ensemble de la pluralité de liaisons MIMO disponibles, et
la retransmission (S5) des données demandées sur ledit sous-ensemble sélectionné en fonction du rang réduit et de la réallocation de ressources radio,
dans lequel la réallocation comprend des sauts dans le domaine spatial.

**2.** Procédé selon la revendication 1, **caractérisé en ce que** ladite étape de réallocation comprend un basculement depuis le multiplexage spatial vers une diversité d'émissions espace temps.

**3.** Procédé selon la revendication 1, **caractérisé par** la sélection d'une ou de plusieurs liaisons MIMO en vue d'une retransmission sur la base de retour reçu d'informations sur la qualité de canal, CQI, et de demande HARQ pour une transmission sur liaison MIMO en défaut, et la réallocation de séquences pilote et de la puissance d'émission pour lesdites liaisons MIMO sélectionnées.

**4.** Procédé selon la revendication 1, **caractérisé par** la retransmission de bits systématiques pour des données demandées avec le rang réduit.

**5.** Procédé selon la revendication 1, **caractérisé par** la sélection aléatoire du sous-ensemble de liaison MIMO en vue d'une retransmission.

**6.** Procédé conforme à une quelconque combinaison des revendications 3 à 5.

**7.** Procédé selon la revendication 1, **caractérisé par** la retransmission des données demandées en utilisant de multiples liaisons MIMO.

**8.** Agencement dans un système de communication sans fil à entrées et sorties multiples, MIMO, comportant une pluralité de liaisons MIMO disponibles associées à des paires d'antennes d'émission réception du système de communication sans fil MIMO, **caractérisé par** :

un moyen (10) permettant de transmettre des données sur une pluralité de liaisons MIMO disponibles en fonction d'un rang prédéterminé et d'une allocation de ressources radio chacune de la pluralité de liaisons MIMO disponibles occupant un rang,
un moyen (20) permettant de recevoir une demande de retransmission pour les données transmises,
un moyen (30) permettant de réduire le rang pour les retransmissions en sélectionnant un sous-ensemble de la pluralité de liaisons MIMO disponibles,
un moyen (40) permettant d'allouer à nouveau de façon adaptative des ressources radio disponibles au dit sous-ensemble en réassignant au moins un espace pilote au sous-ensemble de la pluralité de liaisons MIMO disponibles, et
un moyen (50) permettant de retransmettre les données demandées sur ledit sous-ensemble sélectionné en fonction du rang réduit et de la réallocation de ressources radio,
dans lequel la réallocation comprend des sauts dans le domaine spatial.

subcarrier →

OFDMA symbol →

1 PUSC cluster by 4 OFDMA symols

PUSC data tones

Antenna 0 pilot subcarrier

Antenna 1 pilot subcarrier

Fig. 1

EP 2 165 450 B1

Fig. 2b

Fig. 2a

```
          ╭─────────────╮
          │    START    │
          ╰─────────────╯
                 │
    ┌────────────────────────┐
    │  TRANSMIT DATA STREAMS │
    │ BASED ON PREDETERMINED │   S1
    │  MIMO RANK AND RADIO   │
    │  RESOURCE ALLOCATION   │
    └────────────────────────┘
                 │
    ┌────────────────────────┐
    │ RECEIVE RETRANSMISSION │   S2
    │        REQUEST         │
    └────────────────────────┘
                 │
    ┌────────────────────────┐
    │  REDUCE PREDETERMINED  │   S3
    │          RANK          │
    └────────────────────────┘
                 │
    ┌────────────────────────┐
    │ ADAPTIVELY RE-ALLOCATE │
    │    AVAILABLE RADIO      │   S4
    │       RESOURCES        │
    └────────────────────────┘
                 │
    ┌────────────────────────┐
    │  RETRANSMIT REQUESTED  │
    │   DATA ACCORDING TO    │   S5
    │   REDUCED RANK AND     │
    │     RE-ALLOCATION      │
    └────────────────────────┘
                 │
          ╭─────────────╮
          │     END     │
          ╰─────────────╯
```

# Fig. 3

Vertical coding

c1

$\underline{c}=[c1, c2]$

c2

Tx                    Rx

# Fig. 4a

Horizontal coding

$\underline{c}$

$\underline{c}=[c1, c2]$

$\underline{d}=[d1, d2]$

$\underline{d}$

Tx                    Rx

# Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1788742 A1

- US 2006020707 W

**Non-patent literature cited in the description**

- *IEEE Std 802.16e-2005*
- Amendment and Corrigendum to IEEE Std 802.16-2004. *IEEE Std 802.16-2004/Corl-2005*

- Air Interface for Fixed and Mobile Broadband Wireless Access Systems, Amendment 2: Physical and Medium Access Control Layers for Combined Fixed and Mobile Operation in License Bands. *IEEE Standard for local and metropolitan area networks,* 28 February 2006